# EUROPÄISCHE PATENTSCHRIFT

(11) **EP 1 281 791 B1**
(45) Veröffentlichungstag und Bekanntmachung des Hinweises auf die Patenterteilung: **19.01.2005**
(21) Anmeldenummer: 02014293.1
(22) Anmeldetag: 27.06.2002
(51) Int. Cl.: C23G 1/36, B01D 17/04

(54) **Verfahren zur Aufbereitung von Entfettungsbädern**
Process for regenerating degreasing baths
Procédé de regéneration des baisn de dégraissage

(30) Priorität: 31.07.2001 DE 10137388
(43) Veröffentlichungstag der Anmeldung: 05.02.2003
(73) Patentinhaber: Feuerverzinkung Hannover GmbH & Co. KG, 30855 Langenhagen (DE)
(72) Erfinder: Hrdina, Mark, Dipl.-Ing. (FH), 30989 Gehrden (DE); Külker, Heinz, Dipl.-Ing., 33397 Rietberg (DE)
(74) Vertreter: TER MEER STEINMEISTER & PARTNER GbR

(56) Entgegenhaltungen:
- EP-A- 0 838 539
- WO-A-89/01056
- DATABASE CA [Online] CHEMICAL ABSTRACTS SERVICE, COLUMBUS, OHIO, US; FUKUDA, AKIMITSU ET AL: "Oil water separation from metal degreasing" retrieved from STN Database accession no. 89:202740 CA XP002217370 -& JP 53 058437 A (NIHON PARKERIZING CO., LTD., JAPAN) 26. Mai 1978 (1978-05-26)
- PATENT ABSTRACTS OF JAPAN vol. 007, no. 114 (C-166), 18. Mai 1983 (1983-05-18) & JP 58 034182 A (NITSUTAN KK), 28. Februar 1983 (1983-02-28)

## Beschreibung

Die Erfindung betrifft ein Verfahren zur Aufbereitung von Entfettungsbädern, bei dem eine Ölphase durch Flotation von der im Entfettungsbad eingesetzten Prozeßlösung getrennt wird, wobei die Prozeßlösung unmittelbar vor oder während der Flotation auf mehr als 70°C erhitzt wird.

Bei der Feuerverzinkung und vergleichbaren Korrosionsschutzverfahren ist in der Vorbehandlung in der Regel eine Entfettungsstufe vorgesehen, in der die Metalloberflächen von anhaftenden Ölen und Fetten aus vorangegangenen Bearbeitungsschritten befreit werden, bevor die Ware dem nächsten Folgeschritt, dem Beizen, zugeführt wird. Im folgenden soll der Begriff "Öl" als Oberbegriff für Öle und Fette benutzt werden.

Am häufigsten in Feuerverzinkereien ist die sogenannte "saure" Entfettung anzutreffen. Dabei werden Prozeßlösungen eingesetzt, die Tenside und Säuregemische (Schwefel-, Salz- und Phosphorsäure) enthalten, um die ölbehaftete Ware zu reinigen.

Laut Herstellerangaben haben "saure" Entfettungsbäder eine Standzeit von ca 5-7 Jahren. Das Entfettungsmittel hat zumeist zwei Komponenten, wobei die eine Komponente (Säurekonzentrat) zur pH-Wert-Einstellung und die andere (Tensidkonzentrat) zur Tensideinstellung dient. Sind der Öleintrag in das Bad sowie die Verschleppungsmengen bekannt, lassen sich die Grenz/Gleichgewichtskonzentration der Ölphase sowie die "relative" Standzeit berechnen. Unter "relativer" Standzeit versteht man die Zeit bis zum Erreichen eines Badzustandes, bei dem die Einschleppmenge an Ölen in das Entfettungsbad genauso groß ist wie die Verschleppungsmenge des Öls in die Folgeprozesse (in-situ-Regeneration). Wenn dieser Zustand erreicht wird, ist die Wirksamkeit des Entfettungsbades in Frage gestellt. Diese "relative" Standzeit liegt insbesondere bei sehr hohen Öleinträgen weit unter der nominalen Standzeit.

Auf die Entfettungsstufe folgen die Beizbäder, in denen das Verzinkungsgut von arteigenen Verunreinigungen wie Rost und Zunder befreit wird. Diese Beizbäder bestehen aus Salzsäure-Wasser-Gemischen, die sich im Laufe ihrer Standzeit mit Eisen anreichern, während korrospondierend der Salzsäuregehalt abnimmt. Bei bestimmten Grenzwerten (Fe-Gehalt ≥130 g/l) bzw. unzureichender Beizgeschwindigkeit werden diese über die bekannten Entsorgungswege entsorgt. Da sich die Beizen im Laufe ihrer Standzeit mit den Verschleppungen aus dem Entfettungsbad (Tenside, Öle) anreichern, während die Eisenkonzentration ständig ansteigt und die Säurekomponente entsprechend abnimmt, verschiebt sich die Löslichkeits- bzw. Sättigungsgrenze von Ölen zu niedrigeren Konzentrationen hin. Die Folge ist, daß besonders bei Standzeitende erhebliche Mengen an Öl an der Oberfläche der Beizen aufrahmen und somit den Vorbehandlungsprozeß stören. Dieser Vorgang wird häufig noch dadurch verstärkt, daß bei Standzeitende die Bäder höher beheizt werden, um eine ausreichende Beizgeschwindigkeit zu erzielen. Die aufgerahmten Öle werden in die Folgeprozesse verschleppt und können dort zu Fehlverzinkungen führen, die weitere Bearbeitungsschritte u. U. bis zur Neuverzinkung nach sich ziehen. Außerdem findet man die verschleppten Öle in dem aus dem Verzinkungsbad abgesaugten Filterstaub wieder, was neben erhöhten Entsorgungskosten für den Filterstaub (der Entsorgungspreis Filterstaubes richtet sich vorwiegend nach dem enthaltenen Ölanteil) auch Standzeitverkürzungen der Filterschläuche nach sich zieht. Um die aufschwimmenden Mengen an Ölen auf den Beizen möglichst gering zu halten. sind kostspielige Pflegemaßnahmen erforderlich.

Bekannte Verfahren zur Abscheidung von Ölen aus dem Entfettungsbad sind Querstromfiltrationsverfahen wie die Mikro- oder Ultrafiltration, die jedoch wegen ihrer Störanfälligkeit und des hohen Aufwands nur begrenzt einsetzbar sind.

In EP-A-0 838 539 wurde ein Verfahren vorgeschlagen, bei dem durch Schwerkrafthennung (Flotation) bei einer Temperatur der Prozeßlösung zwischen 40 und 70 °C eine Aufspaltung in drei Phasen erreicht werden sollte, von denen eine vorwiegend Öle und eine andere vorwiegend Hilfsstoffe enthält.

Aus JP-A-53 058 437 und JP-A-58 034 182 sind Verfahren der eingangs genannten Art bekannt, bei denen die Prozeßlösung auf mehr als 80° C erhitzt wird.

Aus WO-A-89/01056 ist ein Verfahren bekannt, bei dem die Prozeßlösung eine zeitlang auf einer Temperatur von 80 - 100° C gehalten und danach in einem Wärmetauscher wieder abgekühlt und schließlich gefiltert wird.

Aufgabe der Erfindung ist es, mit einem einfachen und dennoch effizienten Verfahren einen konstant und dauerhaft niedrigen Ölgehalt im Entfettungsbad zu gewährleisten. Diese Aufgabe wird erfindungsgemäß dadurch gelöst, daß die Ölphase abgekühlt wird, während sie an der Oberfläche der Prozeßlösung schwimmt, so daß die Ölphase zu einer stark viskosen Substanz verharzt, die anschließend abgeskimmt, abgeschöpft oder abgeleitet wird.

Werden mit Ölen angereicherte bzw. beladene Entfettungslösungen auf eine Temperatur zwischen 70 und 100°C erhitzt, wird die Löslichkeitsgrenze überschritten, und die in Emulsion befindlichen Öle schwimmen an der Badoberfläche auf, konzentrieren sich dort und bilden bei Abkühlung eine zusammenhängende, hochviskose optisch erkennbare Schicht, die sich leicht abskimmen oder abschöpfen läßt. Das Verfahren erfordert in der einfachsten Ausführungsform keinen Einsatz von chemischen Zusätzen wie Flockungsmitteln und dergleichen und läßt sich bei diskontinuierlicher oder kontinuierlicher Arbeitsweise praktisch vollständig automatisieren, so daß eine sehr kostengünstige und, wie sich gezeigt hat, dennoch überaus wirksame Aufbereitung der Prozeßlösung ermöglicht wird. Da die aufbereitete Prozeßlösung in daß Entfettungsbad zurückgeleitet wird, kann die zum Erwärmen der Prozeßlösung auf eine relativ hohe Temperatur eingesetzte Energie dazu genutzt werden, daß Entfettungsbad zu erwärmen bzw. auf seiner Betriebstemperatur zu halten, so daß auch eine sehr energieeffiziente Arbeitsweise ermöglicht wird.

Das Verfahren ist nicht nur auf "saure" Entfettungsstufen anwendbar, sondern kann auch auf basische Entfettungsbäder übertragen werden.

Vorteilhafte Ausgestaltungen der Erfindung ergeben sich aus den Unteransprüchen.

Je näher die Aufspaltungstemperatur bei 100°C liegt, desto aufkonzentrierter und dichter wird die aufschwimmende Ölschicht. Außerdem kann man die Ausprägung dieser Schicht durch konstruktive Maßnahmen, wie z.B. eine Verjüngung des Aufbereitungsbehälters im oberen Bereich unterstützen. Bei Ölgehalten von ca. 0,5 g/l im Entfettungsbad kann so die Ausprägung der Ölschicht mit dem gewünschten Aufkonzentrierungsgrad gewährleistet werden.

Die Ausbildung der Phasengrenze zwischen Öl und Prozeßflüssigkeit, läßt sich erreichen, indem man entweder ein bestimmtes Badvolumen auf die oben genannte Temperatur erwärmt, so daß sich die Ölschicht aus der Prozeßlösung abtrennt und allmählich noch oben steigt, oder indem man die Prozeßflüssigkeit in einem Mischbehälter. der mit einem Rührwerk ausgestattet ist, unter Rühren auf denselben Temperaturbereich erwärmt, so daß die Öl/Fettpartikel einzeln zur Oberfläche aufsteigen und dort eine zusammenhängende Schicht bilden. Es hat sich gezeigt, daß sich bei ausreichender Konzentrationsdichte der Ölschicht während der Abkühlphase der Prozeßflüssigkeit eine Aggregatsänderung des Öls vollzieht: Das an sich flüssige Öl-/Fettkonzentrat "verharzt" zu einer stark viskosen Substanz. Dieser Vorgang vollzieht sich um so schneller und ausgeprägter, wenn man die Aufspaltungstemperatur nahe bei 100 °C wählt und die anschließende Abkühlung sehr rasch durchführt,

Diese Aggregatsänderung des Konzentrates, das aufgrund seiner Konsistenz eine hohe Adhäsionskraft besitzt, erleichtert das Entfernen der Konzentratschicht, beispielsweise mit Hilfe eines Band- oder Scheibenskimmers, ganz erheblich.

Der Abkühlungsprozeß kann bei gleichzeitiger Wärmerückgewinnung durch Wärmeaustausch mit der Prozeßlösung (z. B. im Gegenstromverfahren) beschleunigt werden.

Bei der diskontinuierlichen Aufbereitung wird ein bestimmtes Badvolumen, das von seinem Ölgehalt der täglichen Einschleppmenge an Ölen durch das Verzinkungsmaterial entspricht, in einem doppelwandigen Aufbereitungsbehälter auf 70-100°C erhitzt. Der Aufbereitungsbehälter ist im Bypass zum Entfettungsbad angeordnet und mit einer internen Heizung ausgestattet. Durch Erwärmung erfolgt die Aufspaltung der Öl-Wasser-Emulsion, und die leichtere Ölphase bildet an der Flüssigkeitsoberfläche eine zusammenhängende Schicht. Sobald die gewünschte Grenztemperatur erreicht ist, wird sie für eine gewisse Zeitspanne konstant gehalten, und dann wird (zum Ausbilden der Trennschicht) der Doppelmantel mit Prozeßflüssigkeit im Kreislauf befüllt, und die Prozeßflüssigkeit wird mit kontinuierlichem Rückfluß in das Entfettungsbad durch den Doppelmantel geleitet. Diese Prozeßflüssigkeit wird aufgrund des Wärmeüberganges von der aufgeheizten Prozeßflüssigkeit im Innenraum des Behälters erwärmt. Somit werden die für den beschriebenen Aufbereitungsprozeß erforderlichen Energiemengen reduziert und in Form von Wärmeenergie in das Entfettungsbad zurückgeführt. Die regenerierte Prozeßlösung kühlt sich infolge der beschriebenen Maßnahme sehr rasch ab. Die an der Flüssigkeitsoberfläche abgeschiedene und aufkonzentrierte Ölschicht vollzieht während der Abkühlphase die erwähnte Aggregatsänderung und wandelt sich von einer stark aufkonzentrierten Emulsion in eine stark viskose Substanz um. Da diese Substanz eine hohe Adhäsionskraft besitzt, kann sie problemlos mittels geeigneter Abskimmvorrichtungen oder auch mit anderen Entfernungsmethoden (z.B. Membran, Filtereinrichtungen, Schöpfkelle etc.) entfernt werden. Das abgezogene Öl-/Fettkonzentrat besitzt ungefähr einen. Öl/Fettgehalt von 10-25 % und wird in einem Vorlagebehälter gesammelt und diskontinuierlich entsorgt. Das gereinigte Flotat wird über eine Filtereinheit (z.B. Beutelffiter) zum Abtrennen des Eisenphosphatschlammes und Reduzierung des Eisenphosphatschlammanfalles im Entfettungsbad in das Entfettungsbad zurückgeleitet und hat einen Ölgehalt von weniger als 0,2 g/l. Wenn durch das Aufschwimmen der Öl-/Fettpartikel auch teilweise Tenside "mitgerissen" werden, kann der geringfügige Tensidverlust durch diskontinuierliches "Nachschärfen" des Entfettungsbades mit Tensid-Konzentrat ausgeglichen werden. Es ist allerdings wahrscheinlich, daß es sich bei den durch Flotation abgeschiedenen Tensiden zumindest zum Teil um an Öl gebundene "verbrauchte" und daher ohnehin nicht mehr wirksame Tenside handelt. Das Entfernen dieser verbrauchten Tenside ist dann ein zusätzlicher Regenerationseffekt.

Alternativ kann die thermische Spaltung und die damit verbundene Ölabtrennung, auch kontinuierlich durchgeführt werden.

Im folgenden werden Ausführungsbeispiele der Erfindung anhand der Zeichnungen näher erläutert.

Es zeigen:
- Fig. 1: eine Skizze einer Aufbereitungsanlage zur diskontinuierlichen Durchführung des erfindungsgemäßen Verfahrens; und
- Fig. 2: eine Skizze einer kontinuierlich arbeitenden Aufbereitungsanlage.

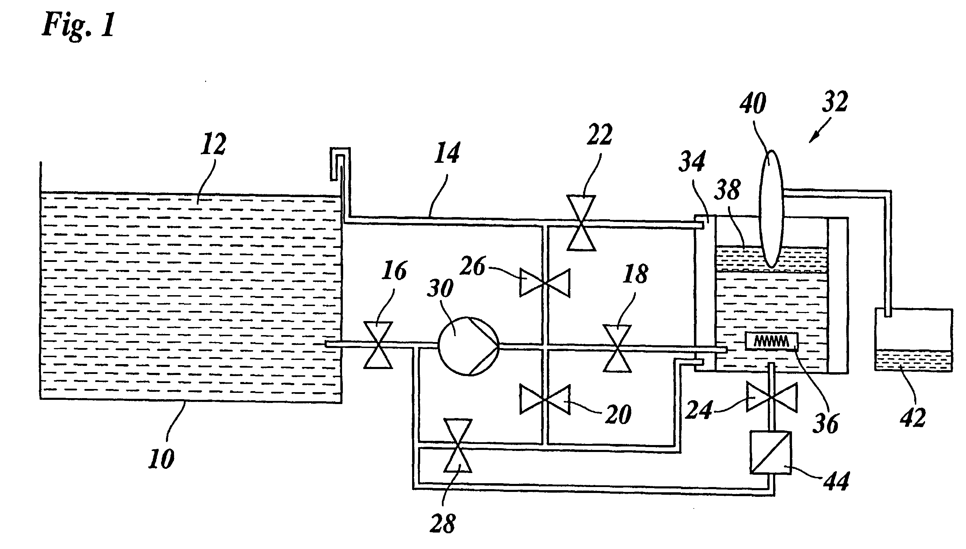

In Figur 1 ist ein Entfettungsbad 10 einer Feuerverzinkungsanlage gezeigt, das eine mit Öl belastete Prozeßlösung 12, beispielsweise ein Säuregemisch, enthält. Ein Leitungssystem 14 mit Absperrventilen 16, 18, 20, 22, 24, 26 und 28 und einer Pumpe 30 verbindet das Entfettungsbad 10 mit einem Trennbehälter 32, der einen hohlen Mantel 34 und eine Heizung 36 aufweist.

Über das Absperrventil 16, die Pumpe 30 und das Absperrventil 18 wird der Trennbehälter 32 mit einer bestimmten Menge an Prozeßlösung 12 befüllt, während alle übrigen Absperrventile geschlossen sind. Nach Beendigung des Befüllvorgangs wird durch eine nicht gezeigte Prozeßsteuerung automatisch die Pumpe 30 abgeschaltet und das Absperrventil 18 geschlossen. Die Prozeßlösung im Trennbehälter 32 wird mit Hilfe der Heizung 36 auf eine Temperatur von beispielsweise 95°C erhitzt. Dadurch kommt es im Trennbehälter zu einer Aufspaltung der Prozeßlösung in eine wässrige Phase und eine weniger dichte Ölphase 38, die zur Oberfläche aufschwimmt und dort eine stark mit Öl angereicherte Konzentratschicht bildet.

Nach Ablauf einer gewissen Wartezeit werden die Absperrventile 20 und 22 geöffnet. und Prozeßlösung 12 aus dem Entfettungsbad 10 wird mit Hilfe der Pumpe 30 über die Absperrventile 16 und 20 durch den hohlen Mantel 34 des Trennbehälters 32 und dann über das Absperrventil 22 zurück in das Entfettungsbad 10 geleitet. Durch die kühlere Prozeßlösung im Mantel 34 wird die Prozeßlösung im Inneren des Trennbehälters 32 relativ rasch abgekühlt. Dadurch kommt es zu einer Verharzung der Ölphase 38. Das so zu einer relativ zähen und gut haftenden Masse verharzte Konzentrat wird mit Hilfe eines Scheibenskimmers 40 entfernt und bis zur endgültigen Entsorgung in einem Sammelbehälter 42 gesammelt.

Anschließend werden die Absperrventile 16, 20 und 22 geschlossen, und stattdessen werden die Absperrventile 24 und 26 geöffnet. Die aufbereitete Prozeßlösung wird dann über das Absperrventil 24, einen Filter 44 und die Pumpe 30 abgepumpt und über das Absperrventil 26 in das Entfettungsbad 10 zurückgeleitet. Die Restwärme der Prozeßlösung aus dem Trennbehälter 32 dient somit zum Aufrechterhalten der Betriebstemperatur im Entfettungsbad 10.

Zum Entleeren des Mantels 34 des Trennbehälters 32 wird das Absperrventil 28 geöffnet, und das Absperrventil 24 wird geschlossen, so daß die Flüssigkeit aus dem Mantel 34 über das Absperrventil 28, die Pumpe 30 und das Absperrventil 26 in das Entfettungsbad 10 zurückgepumpt wird.

Danach kann bei Bedarf ein neuer Aufbereitungszyklus beginnen.

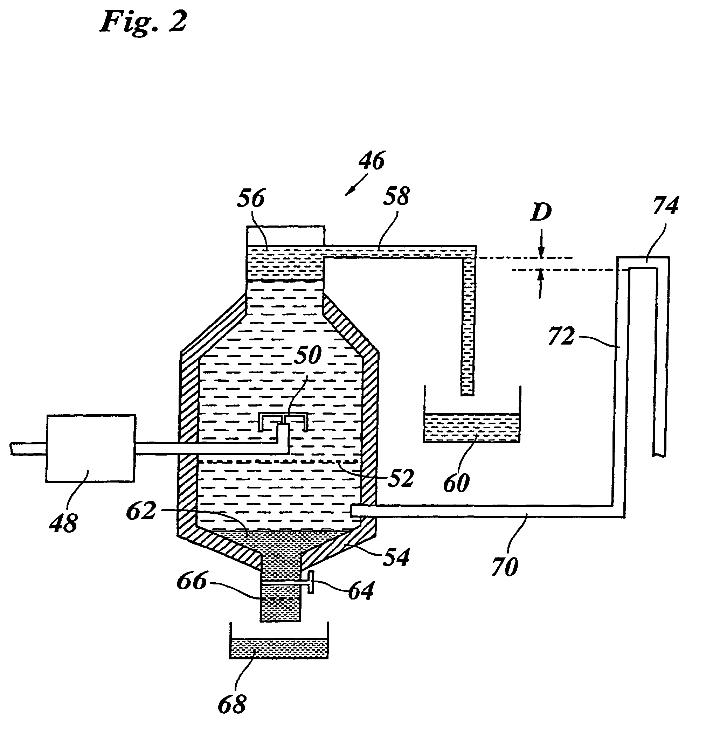

Als alternatives Ausführungsbeispiel soll anhand von Figur 2 ein kontinuierliches Aufbereitungsverfahren beschrieben werden.

Prozeßflüssigkeit aus dem (in Figur 2 nicht gezeigten) Entfettungsbad wird kontinuierlich mit einem Volumenstrom von beispielsweise 100 l/h durch einen am oberen und am unteren Ende verjüngten Trennbehälter 46 geleitet und in einem vorgeschalteten Durchlauferhitzer 48 auf eine Temperatur von beispielsweise 90°C erhitzt. Die Einleitung der Prozeßlösung in den Trennbehälter 46 erfolgt über einen Verteiler 50 oberhalb eines in den Trennbehälter 46 eingebauten Siebes 52. Der Trennbehälter 46 ist mit Ausnahme seines verjüngten oberen Endes von einem wärmeisolierenden Mantel 54 umgeben. Die thermisch abgetrennte Ölphase 56 steigt im Trennbehälter auf und bildet im nicht wärmeisolierten oberen Teil des Trennbehälters eine flüssige Konzentratschicht, die sich abkühlt und über einen Überlauf 58 in einen Sammelbehälter 60 abfließt.

Eisenphosphatschlamm 62, der im Trennbehälter aus der Prozeßlösung ausfällt, sammelt sich im trichterförmigen unteren Teil des Trennbehälters und kann über einen Schieber 64 und einen Filter 66, z.B. einen Beutelfilter, in einen Sammelbehälter 68 abgelassen werden.

Die gereinigte Prozeßlösung, die nur noch einen Rest-Ölgehalt von weniger als 0,2 g/l hat, wird über eine Leitung 70 unterhalb des Siebes 52 aus dem Trennbehälter 46 abgezogen und über eine Steigleitung 72 und einen Überlauf 74 kontinuierlich in das Entfettungsbad zurückgeleitet. Die Prozeßflüssigkeit hat dabei noch eine Temperatur von etwa 85 °C.

Zwischen den Überläufen 58 (Ölkonzentrat) und 74 (gereinigte Prozeßlösung) besteht eine Niveaudifferenz D, die so bemessen ist, daß aufgrund der unterschiedlichen spezifischen Dichten der Pegel der gereinigten Prozeßlösung im Trennbehälter unterhalb des Überlaufes 58 gehalten wird und über den Überlauf 58 selektiv das Konzentrat abgeführt wird.

Bei einem Fassungsvermögen des Trennbehälters 46 von 250 l läßt sich so mit einer äußerst wartungsarmen Anlage eine Aufbereitungsleistung erzielen, die einer zu entsorgenden Konzentratmenge von etwa 1500 kg pro Jahr entspricht.

## Patentansprüche

1. Verfahren zur Aufbereitung von Entfettungsbädern, bei dem eine Ölphase (38, 56) durch Flotation von der im Entfettungsbad (10) eingesetzten Prozeßlösung (12) getrennt wird, wobei die Prozeßlösung (12) unmittelbar vor oder während der Flotation auf mehr als 70°C erhitzt wird, **dadurch gekennzeichnet, daß** die Ölphase (38. 56) abgekühlt wird, während sie an der Oberfläche der Prozeßlösung schwimmt, so daß die Ölphase zu einer stark viskosen Substanz verharzt, die anschließend abgeskimmt, abgeschöpft oder abgeleitet wird.

2. Verfahren nach Anspruch 1, **dadurch gekennzeichnet, daß** die Temperatur der Prozeßlösung (12) während der Flotation mehr als 85°C beträgt.

3. Verfahren nach Anspruch 1 oder 2, **dadurch gekennzeichnet, daß** als Kühlmedium zum Kühlen der Ölphase (38, 56) Prozeßlösung (12) benutzt wird, die wieder in das Entfettungsbad (12) zurückgeleitet wird.

4. Verfahren nach einem der vorstehenden Ansprüche, **dadurch gekennzeichnet, daß** eine Teilmenge der Prozeßlösung (12) aus dem Entfettungsbad chargenweise in einen Trennbehälter (32) eingeleitet, dort durch Flotation aufbereitet und dann wieder in das Entfettungsbad (10) zurückgeleitet wird.

5. Verfahren nach Anspruch 4, **gekennzeichnet durch** die folgenden Schritte:
- Befüllen des Trennbehälters (32) mit Prozeßlösung;
- Erhitzen der Prozeßlösung im Trennbehälter (32),
- Kühlen der Prozeßlösung im Trennbehälter (32) **durch** Hindurchleiten von Prozeßlösung (12) aus dem Entfettungsbad (10) **durch** einen hohlen Mantel (34) des Trennbehälters (32),
- Abskimmen oder Abschöpfen der Ölphase (38) von der Flüssigkeitsoberfläche im Trennbehälter (32) und
- Zurückleiten der gereinigten Prozeßlösung in das Entfettungsbad (10).

6. Verfahren nach einem der Ansprüche 1 bis 3, **dadurch gekennzeichnet, daß** Prozeßlösung (12) aus dem Entfettungsbad (10) kontinuierlich durch einen Durchlauferhitzer (48) und einen Trennbehälter (46) geleitet wird, in dem der Flüssigkeitspegel durch einen Überlauf (74) in einer zum Entfettungsbad (10) zurückführenden Leitung gehalten wird und daß die an der Flüssigkeitsoberfläche im Trennbehälter (46) aufschwimmende Ölphase (56) kontinuierlich über einen höher angeordneten Überlauf (58) abgeleitet wird.

7. Verfahren nach einem der Ansprüche 4 bis 6, **dadurch gekennzeichnet, daß** die in das Entfettungsbad (10) zurückgeleitete Prozeßflüssigkeit gefiltert wird.

8. Verfahren nach einem der Ansprüche 4 bis 6, **dadurch gekennzeichnet, daß** bei der Flotation aus der Prozeßlösung ausfallender Schlamm (62) am Boden des Trennbehälters (46) gesammelt und von Zeit zu Zeit abgezogen wird.

## Claims

1. Process for regenerating degreasing baths, in which process an oil phase (38, 56) is separated by flotation from the process solution (12) used in the degreasing bath (10), the process solution (12) being heated to more than 70°C immediately before or during the flotation, **characterised in that** the oil phase (38, 56) is cooled while it is floating on the surface of the process solution, so that the oil phase resinifies to form a highly viscous substance which is then skimmed off, ladled off or discharged.

2. Process according to claim 1, **characterised in that** the temperature of the process solution (12) during the flotation is more than 85°C.

3. Process according to claim 1 or 2, **characterised in that** process solution (12), which is conveyed back into the degreasing bath (10) again, is used as the cooling medium for cooling the oil phase (38, 56).

4. Process according to any one of the preceding claims, **characterised in that** a partial quantity of the process solution (12) from the degreasing bath is introduced in batches into a separating container (32), is there regenerated by flotation and then conveyed back into the degreasing bath (10) again.

5. Process according to claim 4, **characterised by** the following steps:
- filling the separating container (32) with process solution;
- heating the process solution in the separating container (32);
- cooling the process solution in the separating container (32) by passing process solution (12) from the degreasing bath (10) through a hollow casing (34) of the separating container (32);
- skimming off or ladling off the oil phase (38) from the surface of the liquid in the separating container (32) and
- conveying the cleansed process solution back into the degreasing bath (10).

6. Process according to any one of claims 1 to 3, **characterised in that** process solution (12) from the degreasing bath (10) is conveyed continuously through a flow heater (48) and a separating container (46) in which the liquid level is maintained by an overflow (74) in a pipe leading back to the degreasing bath (10), and **in that** the oil phase (56) floating on the surface of the liquid in the separating container (46) is discharged continuously by way of an overflow (58) arranged higher up.

7. Process according to any one of claims 4 to 6, **characterised in that** the process liquid conveyed back into the degreasing bath (10) is filtered.

8. Process according to any one of claims 4 to 6, **characterised in that** sludge (62) precipitating out of the process solution during the flotation is collected on the base of the separating container (46) and is from time to time drawn off.

## Revendications

1. Procédé de traitement de bains de dégraissage, dans lequel une phase huileuse (38, 56) est séparée par flottation de la solution de processus (12) utilisée dans le bain de dégraissage (10), la solution de processus (12) étant chauffée immédiatement avant ou pendant la flottation à plus de 70°C, **caractérisé en ce que** la phase huileuse (38, 56) est refroidie, pendant qu'elle flotte à la surface de la solution de processus, ce qui fait que la phase huileuse se résinifie en une substance très visqueuse qui est ensuite éliminée par absorption, puisage ou évacuation.

2. Procédé selon la revendication 1, **caractérisé en ce que** la température de la solution de processus (12) est de plus de 85°C pendant la flottation.

3. Procédé selon la revendication 1 ou 2, **caractérisé en ce qu'**on utilise comme agent réfrigérant pour refroidir la phase huileuse (38, 56), la solution de processus (12) qui est à nouveau renvoyée dans le bain de dégraissage (12).

4. Procédé selon l'une des revendications précédentes, **caractérisé en ce qu'**une quantité partielle de la solution de processus (12) provenant du bain de dégraissage est introduite par lots dans un récipient de séparation (32), y est traitée par flottation puis renvoyée à nouveau dans le bain de dégraissage (10).

5. Procédé selon la revendication 4, **caractérisé par** les étapes suivantes :
- introduction de la solution de processus dans le récipient de séparation ;
- chauffage de la solution de processus dans le récipient de séparation (32),
- refroidissement de la solution de processus dans le récipient de séparation (32) par conduite de la solution de processus (12) provenant du bain de dégraissage (10) à travers une enveloppe creuse (34) du récipient de séparation (32),
- élimination par absorption ou puisage de la phase huileuse (38) de la surface du liquide dans le récipient de séparation (32), et
- recyclage de la solution de processus épurée dans le bain de dégraissage (10).

6. Procédé selon l'une des revendications 1 à 3, **caractérisé en ce que** la solution de processus (12) provenant du bain de dégraissage (10) est acheminée en continu à travers un dispositif de chauffage continu (48) et un récipient de séparation (46) dans lequel le niveau du liquide est maintenu par un trop-plein (74) dans une conduite ramenant au bain de dégraissage (10), et **en ce que** la phase huileuse (56), surnageant à la surface du liquide dans le récipient de séparation (46), est évacuée par un trop-plein (58) disposé plus haut.

7. Procédé selon l'une des revendications 4 à 6, **caractérisé en ce que** le liquide de processus, envoyé dans le bain de dégraissage (10), est filtré.

8. Procédé selon l'une des revendications 4 à 6, **caractérisé en ce que** les boues (62), formées lors de la flottation de la solution de processus, s'accumulent sur le fond du récipient de séparation (46) et sont extraites de temps à autre.
